# FASCICULE DE BREVET EUROPEEN

(11) **EP 1 918 086 B1**
(45) Date de publication et mention de la délivrance du brevet: **29.09.2010**
(21) Numéro de dépôt: 07118438.6
(22) Date de dépôt: 15.10.2007
(51) Int. Cl.: B29D 30/06, B29C 33/42, B60C 19/00

(54) **Procédé de moulage d'un pneumatique ayant des performances en bruit améliorées**
Verfahren zum Formen eines Reifens mit verbesserten Geräuscheigenschaften
Method of moulding a tyre with improved noise performance

(30) Priorité: 02.11.2006 FR 0609644
(43) Date de publication de la demande: 07.05.2008
(73) Titulaire: Société de Technologie Michelin, 63000 Clermont-Ferrand (FR); Michelin Recherche et Technique S.A., 1763 Granges-Paccot (CH)
(72) Inventeur: Dautrey, Nicolas, Ota Gunma 373-8668 (JP)
(74) Mandataire: Reynaud, Georges

(56) Documents cités:
- DE-A1- 19 619 859
- JP-A- 2006 117 115
- US-A- 4 399 851
- US-B1- 6 343 843

## Description

L'invention concerne la fabrication des pneumatiques, et se rapporte plus précisément à un procédé et à un dispositif de moulage.

De nombreux développements ont été réalisés pour atténuer le bruit généré par les pneumatiques lors du roulage. Ce bruit est engendré principalement par le contact entre la bande de roulement et le sol, mais également par la vibration de l'air à l'intérieur du pneumatique. Ce bruit particulier est aussi appelé bruit de cavité.

Pour réduire le bruit de cavité, des solutions originales ont été proposées telles que l'usage de mousse, l'implantation de résonateurs du type résonateur de Helmotz, ou bien encore la disposition d'obstacles à la propagation des ondes sonores sur la surface intérieure du pneumatique.

Ces obstacles peuvent être constitués par une multitude d'éléments orientés dans la direction radiale, qui se présentent sous la forme de protubérances allongés, de petite taille et de faible section, et qui peuvent comporter une extrémité effilée.

Ces éléments peuvent être fixés à la paroi intérieure, ou tout simplement moulés au moment de l'étape de moulage et de vulcanisation du pneumatique.

Un pneumatique de ce type est décrit à titre d'exemple dans la publication W0 2006-117115. Cette publication divulgue également un procédé de fabrication permettant de réaliser ce type de pneumatique.

Ce procédé consiste à réaliser le moulage des protubérances au cours de l'opération de vulcanisation du pneumatique. A cet effet, un noyau rigide est introduit dans l'espace intérieur de l'ébauche de pneumatique, de telle sorte que ledit noyau occupe tout l'espace intérieur dans le but de transmettre, par contact avec la paroi interne, la pression et les calories nécessaires au moulage et à la vulcanisation. Ce noyau comporte des perforations de faible section débouchant radialement dans des conduits circonférentiels destinés à évacuer l'air.

Lors de l'introduction du noyau et de l'ébauche de pneumatique dans le moule, la pression exercée par le noyau sur le matériau constituant la paroi interne du pneumatique provoque le transfert par fluage dudit matériau dans les perforations pratiquées dans le noyau rigide. L'air occlus est évacué par les conduits circonférentiels. La vulcanisation du pneumatique s'effectue en même temps que la vulcanisation des protubérances qui prennent ainsi la forme des perforations effectuées dans le noyau.

La mise en oeuvre de ce procédé et du dispositif décrit dans cette publication nécessite toutefois de disposer des équipements spécifiques à l'utilisation de noyaux rigides ainsi qu'une presse de cuisson adaptée pour recevoir ce type de noyau.

L'invention a pour objet de proposer un procédé et des moyens aptes à être utilisé dans des presses de cuisson d'un type standard, telles que des presses de cuisson comprenant un moule destiné à conférer l'empreinte extérieure du pneumatique et une membrane souple pour transmettre la pression de moulage et les calories nécessaires à la vulcanisation à la partie interne de l'ébauche de pneumatique.

Ce procédé se caractérise en ce que une membrane élastique et amovible, comportant des perforations de forme et de section donnée traversant ladite membrane de part en part, est interposée entre la surface intérieure du pneumatique et la membrane de cuisson.

Ceci permet de former, par fluage du matériau constituant la paroi interne du pneumatique à l'intérieur des perforations, des protubérances réparties sur la surface interne du pneumatique.

On observera que, bien que le procédé selon l'invention soit particulièrement adapté pour être mis en oeuvre sur un procédé de vulcanisation classique comportant une membrane de cuisson, il est tout à fait possible d'utiliser une membrane perforée du type décrit ci-dessus dans un procédé de cuisson et de vulcanisation du type à noyau interne rigide tel que celui décrit dans la publication JP 2006-117115.

L'homme du métier est à même d'apprécier que la forme et la disposition des protubérances sur la paroi interne du pneumatique sont directement liées à la forme et à la disposition des perforations réalisées dans la membrane perforée.

En raison de ses propriétés élastique la membrane perforée épouse la forme de la partie interne de l'ébauche de pneumatique en particulier pendant la phase de conformation en presse lorsque l'ébauche de pneumatique est poussée radialement en direction du fond des sculptures pratiquées dans le moule.

La forme de la membrane doit être adaptée pour épouser la surface interne du pneumatique sur laquelle on désire former des protubérances. Toutefois, comme on le verra par la suite cette forme peut être relativement simplifiée si les protubérances sont disposées sur la seule partie de la zone sommet.

A l'issue de l'opération de vulcanisation la membrane perforée est détachée de la partie interne du pneumatique et peut être réutilisée pour la réalisation d'un autre pneumatique du même type.

La description d'une forme préférentielle de mise en oeuvre de l'invention est décrite par la suite en s'appuyant sur les figures 1 à 5 dans lesquelles :
- la figure 1 représente une vue en coupe schématique d'un pneumatique comportant des atténuateurs du type de ceux obtenus par le procédé selon l'invention,
- la figure 2 représente une vue schématique du dessus d'une membrane perforée apte à mettre en oeuvre l'invention.
- la figure 3 représente une vue schématique en coupe de la membrane perforée.
- la figure 4 représente une vue schématique de la disposition des perforations,
- la figure 5 représente une vue schématique en coupe des perforations.

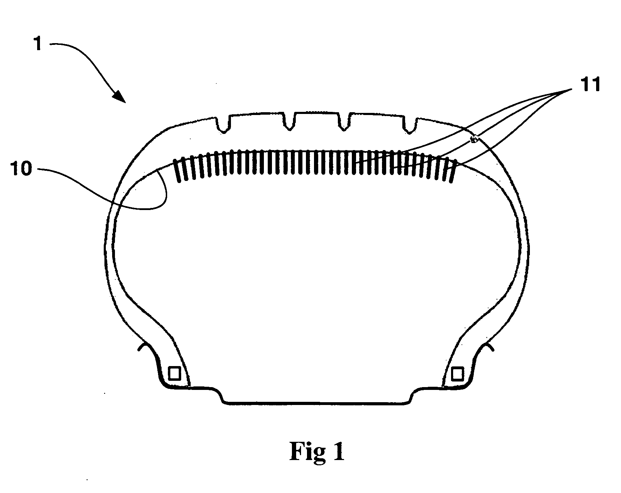

Le pneumatique 1 représenté à la figure 1 comporte sur la surface interne de son sommet un certain nombre de protubérances 11 de forme allongée et de faible section, ayant pour fonction d'atténuer les résonances sonores générées par le pneumatique lors du roulage. Ces protubérances peuvent être de formes diverses. Aussi, en fonction de la nature de l'atténuation recherchée, on peut faire varier le nombre et la répartition des protubérance par unité de surface, ou encore modifier le diamètre à la base d et la hauteur h des protubérances, ou bien encore on peut donner une forme particulière à la protubérance telle qu'une forme cylindrique, conique, prismatique, pyramidale, parallélépipédique, ou une combinaison de ces formes.

La forme des perforations, et des protubérances obtenues, représentées dans les figures servant de support à la description est cylindrique ou conique.

La recherche du meilleur compromis ne fait pas l'objet de l'invention, qui concerne le procédé de moulage, dés lors que la forme désirée n'est pas limitative en regard de l'opération d'extraction de la membrane perforée. Aussi, on évitera des formes présentant des contre dépouilles ou des formes dans lesquelles le diamètre à la base est très faible, ou toute forme susceptible de provoquer des arrachements des protubérances lors de l'extraction de la membrane perforée à l'issue de l'étape de vulcanisation.

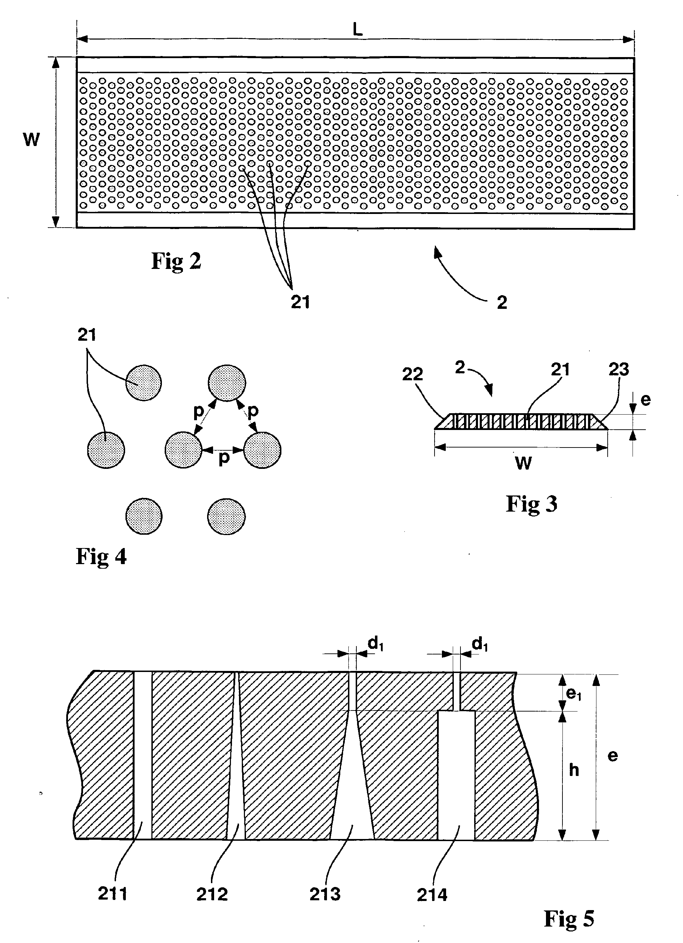

Les protubérances du pneumatique représenté à la figure 1 sont situées sous le sommet. En conséquence, il est possible d'utiliser une membrane perforée (2), telle que représentée aux figures 2 et 3, et qui se présentent sous la forme d'un tronçon de bande dont la longueur L correspond sensiblement à la longueur de la circonférence de la partie interne du sommet de l'ébauche de pneumatique (1) et dont la largeur W correspond sensiblement à la largeur du sommet de l'ébauche de pneumatique (1).

Lorsque cette forme simplifiée de la membrane perforée ne s'avère plus adaptée, en d'autres termes lorsque l'on désire disposer les protubérances sur l'ensemble de la surface intérieure du pneumatique, la forme de la membrane est alors adaptée pour épouser cette surface intérieure et prend alors la forme d'une portion de tore.

Cette membrane comporte des perforations espacées les unes des autres d'un pas p (voir figure 4) dont la section, ici circulaire, peut être adaptée selon les besoins évoqués ci-dessus. Ces perforations traversent la membrane de part en part. En effet, lors du moulage, il est important d'évacuer l'air repoussé par le matériau formant les protubérances. Cet air s'échappe par le coté de la membrane perforée situé du coté de la membrane de cuisson. A l'image des techniques couramment pratiquées dans ce domaine, ladite membrane de cuisson peut comporter des drains aptes à canaliser, puis à évacuer l'air occlus entre la surface intérieure du pneumatique et la membrane de cuisson en direction des bourrelets formant la zone basse du pneumatique.

La longueur de la membrane est ajustée pour correspondre assez précisément au développement intérieur de l'ébauche de pneumatique. Une attention particulière doit être portée à cette réalisation de manière à éviter un fluage du matériau constituant le revêtement intérieur au niveau de la ligne d'aboutage entre les deux extrémités longitudinales de l'anneau. Lorsque cet ajustage est satisfaisant, il a été observé que la pression exercée par la membrane de cuisson est suffisante pour éviter tout mouvement longitudinal de la membrane perforée à cet endroit et susceptible de créer une ouverture entre les deux bords.

Pour palier cette difficulté, il est aussi possible de réaliser une membrane perforée dont les deux extrémités longitudinales se rejoignent pour former un anneau fermé dont le développement est égal au développement intérieur de l'ébauche de pneumatique.

La membrane perforée est introduite dans la partie interne de l'ébauche de pneumatique avant chaque cycle de cuisson et extraite du pneumatique à l'issue de l'étape de vulcanisation.

Le matériau utilisé pour la fabrication de la membrane perforée 2 doit être un matériau susceptible de subir un grand nombre de cycles thermiques et de supporter des températures élevées pouvant aller jusqu'à 200 °C.

De plus la surface de la membrane perforée ne doit pas adhérer à la surface intérieure du pneumatique ni à la surface de la membrane de cuisson. A cet effet on peut choisir de réaliser cette membrane dans un matériau à base de silicone ou encore dans un élastomère caoutchoutique tel que l'EPDM. Dans ce dernier cas, il sera nécessaire de faire un traitement de surface à chaque utilisation en pulvérisant, à titre d'exemple, une solution anti-collante, telle qu'une solution à base de silicone.

Il importe également de choisir un matériau dont la dureté shore est ni trop élevée pour éviter des déformations importantes du profil intérieur du pneumatique, ni trop faible pour éviter les déformations des perforations sous l'effet de la pression de la membrane de cuisson. A cet effet un matériau dont la dureté Shore A est comprise entre 60 et 90 points, et préférentiellement 70, s'est révélé tout à fait adapté pour une membrane d'épaisseur e de 10mm, comportant des perforations d'un diamètre de 1mm espacées d'un pas p de 1mm.

Il est bien sûr tout à fait possible d'adapter le procédé et le dispositif pour réaliser des perforations disposées réaliser toutes sortes de géométries concernant la disposition la hauteur ou le pas des perforations en fonction de la forme et de la disposition des protubérances que l'on cherche à obtenir.

La membrane perforée peut comporter, le long de ses deux cotés longitudinaux, des chanfreins (22, 23), d'une pente et d'une largeur adaptée, de manière à favoriser le moulage des bords et à éviter les effets néfastes que pourraient provoquer une marche d'escalier trop importante.

En règle générale la hauteur h des protubérances correspond à l'épaisseur e de la membrane perforée lorsque la section à la base de la protubérance est relativement faible comme cela est représenté sous les références 211 ou 212, à la figure 5. On entend par section faible, une section égale ou inférieure à 2mm² environ.

Toutefois, lorsque l'on désire réaliser des protubérances ayant une section à la base plus élevée il s'avère alors nécessaire de modifier la forme des perforations. En effet, il faut éviter que le matériau constituant la surface inférieure du pneumatique ne flue au-delà de la membrane perforée dans l'espace compris entre la membrane perforée et la membrane de cuisson.

Dans ce cas il convient de choisir une membrane d'une épaisseur e supérieure à la hauteur des protubérance, et de réaliser une perforation ayant une section correspondant à la forme et à la section désirée des protubérances et d'une hauteur h, puis de réaliser une perforation complémentaire de très faible section et de hauteur e₁ telle que la somme de la hauteur h et de la hauteur e₁ soit égale à l'épaisseur e, de manière à former un conduit d'évacuation de l'air occlus du coté de la membrane perforée en contact avec la membrane de cuisson. On entend par très faible section une section inférieure à 0,5 mm². Ces perforations sont représentées sous les références 213 et 214 de la figure 5.

Il est important de signaler enfin que les durées et les températures de cuisson doivent être ajustées en conséquence en raison de la présence de la membrane perforée.

Ainsi, le procédé selon l'invention, basé sur l'utilisation d'une membrane perforée élastique, généralement souple et amovible permet de réaliser simplement un pneumatique comportant des protubérances, en mettant en oeuvre un procédé classique de vulcanisation, sans qu'il soit nécessaire de procéder à des investissements coûteux.

## Revendications

1. Procédé de moulage et de vulcanisation d'un pneumatique dans lequel l'ébauche de pneumatique est disposée dans une presse de cuisson comprenant un moule destiné à conférer la forme extérieure du pneumatique et un moyen apte à transmettre la pression de moulage et les calories nécessaires à la vulcanisation à la partie interne de ladite ébauche de pneumatique,
**caractérisé en ce qu'**une membrane (2) élastique et amovible, comportant des perforations (21) de forme et de section donnée traversant ladite membrane de part en part, est interposée, pendant l'étape de moulage et de vulcanisation, entre la surface intérieure du pneumatique et la membrane de cuisson, de manière à former, par fluage du matériau constituant la paroi interne du pneumatique à l'intérieur des perforations, des protubérances (11) réparties sur la surface interne du pneumatique (1).

2. Procédé selon la revendication 1 dans lequel le moyen apte à transmettre la pression de moulage et les calories à la partie interne du pneumatique est un noyau rigide.

3. Procédé selon la revendication 1 dans lequel le moyen apte à transmettre la pression de moulage et les calories à la partie interne du pneumatique est une membrane élastique souple.

4. Procédé selon l'une des revendications 1 à 3, dans lequel la membrane perforée (2) est détachée de la paroi interne du pneumatique après l'étape de vulcanisation.

5. Procédé selon l'une des revendications 1 à 4, dans lequel on dispose la membrane perforée (2) sur la surface interne de l'ébauche de pneumatique (1) avant d'introduire ladite ébauche de pneumatique dans la presse de vulcanisation.

6. Procédé selon la revendication 5, dans lequel la membrane perforée (2) se présente sous la forme d'un tore épousant la surface interne de l'ébauche de pneumatique.

7. Procédé selon la revendication 5, dans lequel la membrane perforée (2) se présente sous la forme d'un tronçon de bande dont on ajuste la longueur L de manière à ce qu'elle corresponde sensiblement à la longueur de la circonférence de la partie interne du sommet de l'ébauche de pneumatique (1) et dont la largeur W correspond sensiblement à la largeur du sommet de l'ébauche de pneumatique (1).

8. Procédé selon la revendication 7, dans lequel la membrane (2) est refermée sur elle-même dans le sens de la longueur pour former un anneau.

9. Procédé selon l'une des revendications 1 à 8, dans lequel les bords longitudinaux de la membrane perforée (2) comportent un chanfrein (22, 23).

10. Procédé selon l'une des revendications 1 à 9, dans lequel les perforations pratiquées dans la membrane (2) ont une forme basée sur la combinaison d'une forme cylindrique (211, 214), conique (212, 213), prismatique, parallélépipédique ou pyramidale.

11. Procédé selon l'une des revendications 1 à 10, dans lequel la hauteur h des protubérances (11) est sensiblement égale à l'épaisseur e de la membrane perforée (2).

12. Procédé selon la revendication 1 à 10, dans lequel la hauteur h des protubérances (11) est inférieure à l'épaisseur e de la membrane perforée (2).

13. Procédé selon la revendication 12, dans lequel les perforations (213, 214) pratiquées dans la membrane (2) comportent une première partie, de hauteur h, dont la section correspond sensiblement à la section de la protubérance, et une seconde partie, de hauteur e₁, telle que l'épaisseur e de la membrane soit égale à la somme de la hauteur h et de la hauteur e₁, et dont la section a une surface inférieure à 0,5 mm².

14. Procédé selon l'une des revendications 1 à 13, dans lequel on choisit le matériau qui forme la membrane perforée (2) parmi les matériaux à base de silicone ayant une dureté shore A comprise entre 60 et 90.

15. Procédé selon l'une des revendications 1 à 13, dans lequel on choisit le matériau qui forme la membrane perforée (2) est parmi les matériaux à base d'élastomère caoutchoutique, et dans lequel on enduit ladite membrane perforée (2) à l'aide d'une solution à base de silicone à chaque emboîtage du pneumatique dans la presse.

## Claims

1. Process for moulding and vulcanizing a tyre, in which the tyre blank is placed in a curing press comprising a mould intended to confer the outer shape of the tyre, and a means capable of transmitting the moulding pressure and the heat needed to vulcanize the internal portion of said tyre blank,
**characterized in that** an elastic removable membrane (2), which includes perforations (21) of given shape and cross section passing right through said membrane, is interposed, during the moulding and the vulcanizing step, between the inner surface of the tyre and the curing membrane, so as to form, by the constituent material of the internal wall of the tyre flowing into the perforations, protuberances (11) distributed over the internal surface of the tyre (1).

2. Process according to Claim 1, in which the means capable of transmitting the moulding process and the heat to the internal portion of the tyre is a rigid core.

3. Process according to Claim 1, in which the means capable of transmitting the moulding process and the heat to the internal portion of the tyre is a flexible elastic membrane.

4. Process according to one of Claims 1 to 3, in which the perforated membrane (2) is detached from the internal wall of the tyre after the vulcanization step.

5. Process according to one of Claims 1 to 4, in which the perforated membrane (2) is placed on the internal surface of the tyre blank (1) before said tyre blank is introduced into the vulcanization press.

6. Process according to Claim 5, in which the perforated membrane (2) takes the form of a torus matching the internal surface of the tyre blank.

7. Process according to Claim 5, in which the perforated membrane (2) takes the form of a strip segment, the length L of which is adjusted so that it corresponds approximately to the length of the circumference of the internal portion of the crown of the tyre blank (1) and the width W of which corresponds approximately to the width of the crown of the tyre blank (1).

8. Process according to Claim 7, in which the membrane (2) is closed up on itself in the length direction, so as to form a ring.

9. Process according to one of Claims 1 to 8, in which the longitudinal edges of the perforated membrane (2) have a chamfer (22, 23).

10. Process according to one of Claims 1 to 9, in which the perforations made in the membrane (2) have a shape based on the combination of a cylindrical (211, 214), conical (212, 213), prismatic, parallelepipedal or pyramidal shape.

11. Process according to one of Claims 1 to 10, in which the height h of the protuberances (11) is approximately equal to the thickness e of the perforated membrane (2).

12. Process according to Claims 1 to 10, in which the height h of the protuberances (11) is less than the thickness e of the perforated membrane (2).

13. Process according to Claim 12, in which the perforations (213, 214) made in the membrane (2) comprise a first portion, of height h, the cross section of which corresponds approximately to the cross section of the protuberance, and a second portion, of height e₁, such that the thickness e of the membrane is equal to the sum of the height h and of the height e₁, and the cross section of which has an area of less than 0.5 mm².

14. Process according to one of Claims 1 to 13, in which the material that forms the perforated membrane (2) is chosen from silicone-based materials having a Shore A hardness of between 60 and 90.

15. Process according to one of Claims 1 to 13, in which the material that forms the perforated membrane (2) is chosen from materials based on a rubbery elastomer, and in which said perforated membrane (2) is coated using a silicone-based solution each time a tyre blank is inserted into the press.

## Patentansprüche

1. Verfahren zum Gießen und Vulkanisieren eines Luftreifens, wobei der Luftreifenrohling in einer Kochpresse angeordnet wird, der eine Form aufweist, die dazu bestimmt ist, dem Luftreifen seine äußere Form zu verleihen, und ein Mittel aufweist, um den Gießdruck und die für die Vulkanisation erforderliche Energie an den Innenteil des Luftreifenrohlings zu übertragen,
**dadurch gekennzeichnet, dass** während des Schrittes des Gießens und Vulkanisierens eine elastische und abnehmbare Membran (2), die Perforationen (21) mit gegebener Form und gegebenem Querschnitt, die durch die Membran von einer Seite zur anderen verlaufen, zwischen die innere Oberfläche des Luftreifens und die Kochmembran eingesetzt wird, derart, dass durch Kriechen des Materials, das die Innenwand des Luftreifens innerhalb der Perforationen bildet, Ausstülpungen (11) gebildet werden, die auf der Innenfläche des Luftreifens (1) verteilt sind.

2. Verfahren nach Anspruch 1, wobei das Mittel, das den Gießdruck und die Energie an den inneren Teil des Luftreifens übertragen kann, ein starrer Kern ist.

3. Verfahren nach Anspruch 1, wobei das Mittel, das den Gießdruck und die Energie an den inneren Teil des Luftreifens übertragen kann, eine nachgiebige elastische Membran ist.

4. Verfahren nach einem der Ansprüche 1 bis 3, wobei die perforierte Membran (2) nach dem Vulkanisierungsschritt von der Innenwand des Luftreifens abgelöst wird.

5. Verfahren nach einem der Ansprüche 1 bis 4, wobei die perforierte Membran (2) auf der inneren Oberfläche des Luftreifenrohlings (1) angeordnet wird, bevor der Luftreifenrohling in die Vulkanisierungspresse eingeführt wird.

6. Verfahren nach Anspruch 5, wobei die perforierte Membran (2) die Form eines Torus aufweist, der sich an innere Oberfläche des Luftreifenrohlings anschmiegt.

7. Verfahren nach Anspruch 5, wobei die perforierte Membran (2) die Form eines Bandteilstücks hat, dessen Länge L in der Weise eingestellt wird, dass sie im Wesentlichen der Länge des Umfangs des inneren Teils des Scheitels des Luftreifenrohlings (1) entspricht und dessen Breite W im Wesentlichen der Breite des Scheitels des Luftreifenrohlings (1) entspricht.

8. Verfahren nach Anspruch 7, wobei die Membran (2) in Richtung der Länge auf sich selbst gelegt wird, um einen Ring zu bilden.

9. Verfahren nach einem der Ansprüche 1 bis 8, wobei die longitudinalen Kanten der perforierten Membran (2) eine Fase (22, 23) aufweisen.

10. Verfahren nach einem der Ansprüche 1 bis 9, wobei die in der Membran (2) ausgebildeten Perforationen eine Form haben, die auf der Kombination einer zylindrischen Form (211, 214), einer konischen Form (212, 213), einer Prismenform, einer Parallelepipedform oder einer Pyramidenform basiert.

11. Verfahren nach einem der Ansprüche 1 bis 10, wobei die Höhe h der Ausstülpungen (11) im Wesentlichen gleich der Dicke e der perforierten Membran (2) ist.

12. Verfahren nach Anspruch 1 bis 10, wobei die Höhe h der Ausstülpungen (11) kleiner ist als die Dicke e der perforierten Membran (2).

13. Verfahren nach Anspruch 12, wobei die Perforationen (213, 214), die in der Membran (2) ausgebildet sind, einen ersten Teil mit Höhe h, dessen Querschnitt im Wesentlichen dem Querschnitt der Ausstülpung entspricht, und einen zweiten Teil mit Höhe e₁ aufweisen, derart, dass die Dicke e der Membran gleich der Summe aus der Höhe h und der Höhe e₁ ist, und deren Querschnitt eine Oberfläche von weniger als 0,5 mm² hat.

14. Verfahren nach einem der Ansprüche 1 bis 13, wobei das Material, das die perforierte Membran (2) bildet, aus Materialien auf Silikonbasis gewählt wird, die eine Shore-A-Härte im Bereich von 60 bis 90 haben.

15. Verfahren nach einem der Ansprüche 1 bis 13, wobei das Material, das die perforierte Membran (2) bildet, aus Materialien auf Kautschuk-Elastomer-Basis gewählt wird, wobei die perforierte Membran (2) mit Hilfe einer Lösung auf Silikonbasis bei jedem Einsetzen des Luftreifens in die Presse überzogen wird.
